(19)

Europäisches
Patentamt
European
Patent Office
Office européen
des brevets

(11) **EP 4 481 069 A1**

(12) **EUROPEAN PATENT APPLICATION**

(43) Date of publication:
**25.12.2024  Bulletin 2024/52**

(21) Application number: 24180291.7

(22) Date of filing: **05.06.2024**

(51) International Patent Classification (IPC):
*C22B 3/00* (2006.01)          *C22B 47/00* (2006.01)
*C22B 3/06* (2006.01)          *C22B 3/44* (2006.01)
*C22B 7/00* (2006.01)          *C22B 26/12* (2006.01)
*H01M 10/54* (2006.01)

(52) Cooperative Patent Classification (CPC):
**C22B 26/12; C22B 3/06; C22B 3/44; C22B 7/007;
C22B 23/0407; C22B 47/00; H01M 4/525;
H01M 10/54**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  07.06.2023  KR 20230072764

(71) Applicant: **SK Innovation Co., Ltd.**
**Seoul 03188 (KR)**

(72) Inventors:
• YOO, Su Min
  34124 Daejeon (KR)
• PARK, Ji Yun
  34124 Daejeon (KR)
• SHIM, Su Hyang
  34124 Daejeon (KR)
• LEE, Hyeon Hui
  34124 Daejeon (KR)

(74) Representative: **Thoma, Michael**
**Lorenz Seidler Gossel
Rechtsanwälte Patentanwälte
Partnerschaft mbB
Widenmayerstraße 23
80538 München (DE)**

(54) **METHOD OF RECOVERING TRANSITION METAL FROM LITHIUM SECONDARY BATTERY**

(57)     In a method of recovering a transition metal from a lithium secondary battery, a an acidic solution is added to a recovery target material containing a transition metal to form a leachate. A basic compound is added to the leachate in an amount of 0.5 wt% to 1.9 wt% based on a total weight of the leachate to form a first transition metal solution. A fluorine compound is added to the first transition metal solution to form a second transition metal solution.

EP 4 481 069 A1

**Description**

TECHNICAL FIELD

Embodiments of the present disclosure relate to a method of recovering a transition metal from a lithium secondary battery. More particularly, the embodiments relate to a method of recovering a transition metal from a cathode active material of a lithium secondary battery.

BACKGROUND

Secondary batterie are widely employed as a power source for mobile electronic devices including camcorders, mobile phones, laptop computers, and also for electric and hybrid vehicles. Lithium secondary batteries are already widely applied and are also actively developed due to their high operational voltage and energy density per unit weight, high charging rate, and compact dimension characteristics.

A lithium metal oxide is typically used as the cathode active material for the lithium secondary battery. The lithium metal oxide may further contain a valuable metal such as iron, nickel, cobalt, manganese, etc.

As the above-mentioned high-cost valuable metals are used for the cathode active material, at least 20% of the production cost of the secondary battery is required for the manufacturing of the cathode active material. Additionally, as environment protection issues have recently been highlighted regarding the potential pollution caused by waste secondary batteries, various recycling methods of the secondary batteries and in particular of the cathode active material are being actively researched.

SUMMARY

According to an embodiment of the present disclosure, there is provided a method of recovering a target material including a transition metal from a lithium secondary battery exhibiting generally an improved balance of efficiency and purity over existing methods.

According to another embodiment of the present disclosure, there is provided a method of recovering a transition metal from a lithium secondary battery exhibiting generally improved efficiency and purity.

According to an embodiment, a method of recovering a transition metal from a lithium secondary battery is provided, the method including adding an acidic solution to a recovery target material containing a transition metal to form a leachate. A basic compound may then be added to the leachate, for example, in an amount of 0.5 wt% to 1.9 wt% based on a total weight of the leachate to form a first transition metal solution. A fluorine compound may also be added to the first transition metal solution to form a second transition metal solution.

In some embodiments, in the formation of the second transition metal solution, calcium contained in the first transition metal solution may be precipitated by the fluorine compound.

In some embodiments, the transition metal may include at least one of nickel, cobalt, and manganese.

In some embodiments, cobalt and nickel may be sequentially extracted from the second transition metal solution.

In some embodiments, manganese may be extracted from the second transition metal solution.

In some embodiments, in the extraction of manganese, calcium remaining in the second transition metal solution may be removed.

In some embodiments, the recovery target material may include a precipitated product containing the reduced transition metal.

In some embodiments, the acidic solution may include sulfuric acid.

In some embodiments, a pH of the leachate may be in a range from 1 to 2.

In some embodiments, the basic compound may include at least one of sodium hydroxide, lithium hydroxide and potassium hydroxide.

In some embodiments, a pH of the first transition metal solution may be in a range from 3 to 4.5.

In some embodiments, the fluorine compound may include at least one of sodium fluoride, magnesium fluoride and potassium fluoride.

In some embodiments, the first transition metal solution may contain calcium and aluminum.

In some embodiments, the fluorine compound may be added to satisfy the following Formula 1.

Formula 1

$$1 \leq (FL\#) \div [((CA\#) \times 2) + ((AL\#) \times 3)] \leq 2,$$

Wherein in Formula 1, FL# is the number of moles of fluorine contained in the fluorine compound, CA# is the number of moles of calcium contained in the first transition metal solution, and AL# is the number of moles of aluminum contained in the first transition metal solution.

In some embodiments, a pH of the second transition metal solution may be greater than 5, and less than or equal to 7.

In some embodiments, the formation of the first transition metal solution and the formation of the second transition metal solution may be performed at a temperature ranging from 50°C to 90°C.

According to the above-described embodiments, impurities (e.g., aluminum, iron, calcium, etc.) may be removed through a selective precipitation of metal ions due to a difference in solubility, and transition metals (e.g., nickel, cobalt, manganese, etc.) may be recovered with high purity.

For example, a basic compound may be added to form a pH section in which nickel, cobalt and manganese are not precipitated, so that aluminum and iron may be removed while reducing a loss of nickel, cobalt and manganese.

In some embodiments, calcium may be removed by adding a predetermined amount of a fluorine compound, and the loss of nickel, cobalt and manganese may be reduced even in a pH section in which nickel, cobalt and manganese are precipitated.

Thus, the basic compound and the fluorine compound serving as precipitating agents may each be added for each pH section, and a transition metal recovery efficiency of a lithium secondary battery may be improved.

These and other features and advantages of the embodiments of the present disclosure may become better understood from the following detailed description in conjunction with the drawings.

BRIEF DESCRIPTION OF THE DRAWINGS

FIG. 1 is a flow diagram illustrating a method of recovering a transition metal from a lithium secondary battery in accordance with embodiments of the present disclosure.

FIG. 2 is a graph showing a solubility of a metal hydroxide according to pH.

DETAILED DESCRIPTION OF THE EMBODIMENTS

According to embodiments of the present disclosure, a method for recovering a transition metal from a lithium secondary battery including sequential additions of a basic compound and a fluorine compound.

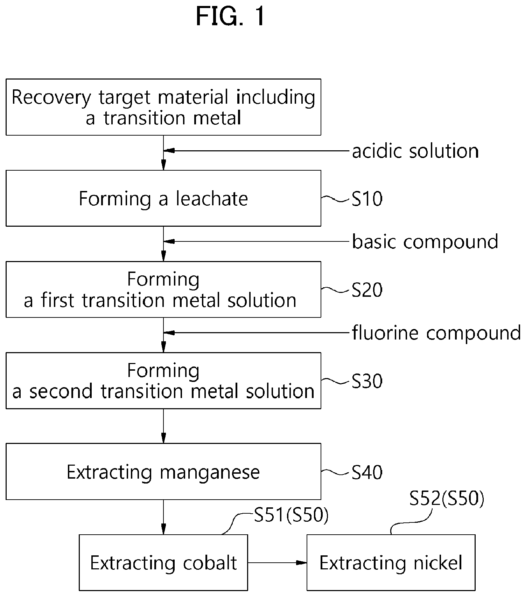

FIG. 1 is a schematic flow diagrams illustrating a method of recovering a transition metal from a lithium secondary battery in accordance with embodiments of the present disclosure.

Referring to FIG. 1, an acidic solution may be added to a recovery target material containing a transition metal to form a leachate (e.g., in an operation of S10).

In some embodiments, the transition metal may include at least one selected from the group consisting of nickel, cobalt and manganese. For example, the transition metal may include nickel and cobalt.

In some embodiments, the recovery target material may include a precipitated product containing a reduced transition metal. For example, a cathode active material may be obtained by crushing a waste lithium secondary battery or a used lithium secondary battery, and the lithium may be removed from the cathode active material to obtain the precipitated product containing the reduced transition metal.

The lithium secondary battery may be of any suitable type, including, for example, a typical type comprising an electrode assembly including a cathode, an anode and a separator interposed between the cathode and the anode. The cathode and the anode may include cathode and active material layers coated on cathode and anode current collectors, respectively.

For example, the cathode active material included in the cathode active material layer may include an oxide containing lithium and a transition metal.

In some embodiments, the cathode active material may include a compound having a structure represented by Chemical Formula 1 below.

Chemical Formula 1          $Li_xNi_{1-y}M_yO_{2+z}$

In Chemical Formula 1, $0.9 \leq x \leq 1.1$, $0 \leq y \leq 0.7$, $-0.1 \leq z \leq 0.1$, and M may include at least one selected from Na, Mg, Ca, Y, Ti, Zr, Hf, V, Nb, Ta. , Cr, Mo, W, Mn, Co, Fe, Cu, Ag, Zn, B, Al, Ga, C, Si, Sn and Zr.

In some embodiments, the cathode active material may include an NCM-based lithium oxide containing nickel, cobalt and manganese.

For example, a waste cathode may be recovered by separating the cathode from the used lithium secondary battery. The waste cathode may include the cathode current collector (e.g., aluminum (Al)) and the cathode active material layer as described above, and the cathode active material layer may include a conductive material and a binder together with the cathode active material as described above.

The conductive material may include, e.g., a carbon-based material such as graphite, carbon black, graphene, carbon nanotube, etc. The binder may include a resin material, e.g., vinylidenefluoride-hexafluoropropylene copolymer (PVDF-co-HFP), polyvinylidenefluoride (PVDF), polyacrylonitrile, polymethylmethacrylate, etc.

For example, the waste cathode may be pulverized to collect the cathode active material. The cathode active material may include a powder of the lithium-transition metal oxide, e.g., a powder of the NCM-based lithium oxide (e.g., $Li(NCM)O_2$.

In some embodiments, the retrieved cathode active material may include some components derived from the cathode current collector, the binder or the conductive material. In some embodiments, the retrieved cathode active material may substantially consist of cathode active material particles such as NCM-based lithium oxide.

In some embodiments, the cathode active material may be heat-treated to remove or reduce the conductive material and binder included in the cathode active material, thereby obtaining lithium transition metal oxide particles with high purity.

A temperature of the heat treatment temperature may be, e.g., in a range from about 100°C to 500°C, or from about 350°C to 450°C. Within the above range, the conductive material and the binder may be substantially removed, thereby preventing decomposition and damage to the lithium transition metal oxide particles.

In some embodiments, lithium may be removed from the cathode active material in the form of lithium hydroxide, and the precipitate product containing the reduced transition metal may be obtained.

For example, the cathode active material may be reduced using a hydrogen gas that is a reducing gas to generate a preliminary lithium precursor containing lithium hydroxide (LiOH), lithium oxide (e.g., $Li_2O$), etc., and a transition metal or a transition metal oxide. For example, Ni, Co, Mn, NiO, CoO or MnO may be produced together with the preliminary lithium precursor through the reductive reaction.

The reductive reaction may be performed at a temperature from about 400°C to 700°C, or from about 450°C to 550°C. Within the above reaction temperature range, the reductive reaction may be promoted without causing re-agglomeration or recombination of the preliminary lithium precursor and the transition metal/transition metal oxide.

For example, when the mixture of the preliminary lithium precursor, and the transition metal or the transition metal oxide is washed with water containing a calcium compound, the preliminary lithium precursor in the form of lithium hydroxide (LiOH) may be substantially dissolved in water. For example, the preliminary lithium precursor in the form of lithium oxide and lithium carbonate may be partially converted to lithium hydroxide and dissolved in water by the washing treatment.

In an embodiment, the calcium compound may include at least one of calcium hydroxide and calcium oxide. For example, the calcium compound may be added during the washing process, so that lithium carbonate and lithium fluoride may be converted into lithium hydroxide to be included in a lithium aqueous solution containing the preliminary lithium precursor, and calcium carbonate and calcium fluoride having low solubility may be precipitated.

In an embodiment, the lithium aqueous solution and a precipitated product containing the reduced transition metal may be separately obtained through a solid-liquid separation process after the washing treatment. For example, the precipitated product containing the reduced transition metal may include nickel, cobalt and manganese produced by the reductive reaction, and may include calcium carbonate and calcium fluoride.

An acidic solution may be added to the recovery target material containing the transition metal prepared according to the above-described embodiments to form a leachate. For example, the acidic solution may be added to the precipitated product containing the reduced transition metal and solid-liquid separated to obtain the leachate and a leach residue.

In some embodiments, the leachate may include nickel, cobalt, manganese, aluminum, iron and calcium. For example, a total concentration of nickel, cobalt and manganese in the leachate may be in a range from 100 g/L to 120 g/L.

In some embodiments, the acidic solution may include at least one of sulfuric acid, hydrochloric acid, nitric acid, oxalic acid and citric acid. In some embodiments, the acidic solution may include sulfuric acid. For example, when using the types of the acidic solution, the transition metal may be easily leached.

In some embodiments, a pH of the leachate may be in a range from 1 to 2. Within the above range, the transition metal may be sufficiently leached while an amount of a basic compound used in a formation of a first transition metal solution may be reduced.

In some embodiments, the leaching may be performed at a temperature of 50°C to 90°C and a rotation rate of 100rpm to 500rpm for 4 to 8 hours.

For example, the temperature may be in a range from 60°C to 85°C, or from 70°C to 80°C. The rotation rate may be in a range from 150rpm to 400rpm, or from 200rpm to 300rpm, and the leaching period may be in a range from 5 hours to 7 hours, or from 5.5 hours to 6.5 hours. Performing leaching within the above parameter ranges, the leaching of the transition metals may be further easily implemented.

For example, in an operation S20, the basic compound may be added to the leachate in an amount of 0.5 weight percent (wt%) to 1.9 wt% based on a total weight of the leachate to form the first transition metal solution.

In some embodiments, the basic compound may include at least one selected from sodium hydroxide, lithium hydroxide and potassium hydroxide. In some embodiments, the basic compound may include sodium hydroxide.

For example, the above-mentioned types of the basic compound may at least partially precipitate iron and aluminum contained in the leachate in the form of a hydroxide, e.g., $Fe(OH)_3$ and $Al(OH)_3$. Thereafter, the first transition metal solution from which iron and aluminum are removed may be obtained by a solid-liquid separation from the leachate.

In some embodiments, the added amount of the basic compound may be in a range from 0.5 wt% to 1.9 wt%, from 0.6 wt% to 1.8 wt%, from 0.6 wt% to 1.7 wt%, from 0.7 wt% to 1.5 wt%, from 0.5 wt% to 1.5 wt%, from 0.5wt% to 1.4 wt%, from 0.6 wt% to 1.3 wt%, from 0.7 wt% to 1 wt%, or from 0.5 wt% to 1 wt% based on the total weight of the leachate.

For example, if the added amount of the basic compound is less than 0.5 wt% based on the total weight of the leachate, a small amount of iron and aluminum may be precipitated in the form of the hydroxide and may not be sufficiently removed. If the added amount of the basic compound exceeds 1.9 wt% based on the total weight of the leachate, the pH may be increased to cause a loss of nickel, cobalt and manganese.

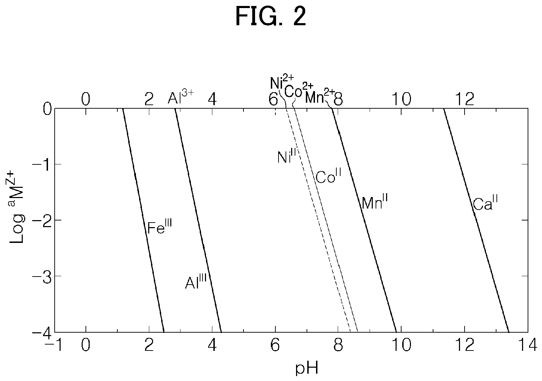

FIG. 2 is a graph showing a solubility of a metal hydroxide according to pH.

Referring to FIG. 2, as the pH increases, iron, aluminum, nickel, cobalt, manganese and calcium may be sequentially precipitated as hydroxides. For example, when the amount of basic compound added is within the above range, the pH may be maintained at which iron and aluminum may be sufficiently precipitated suppressing the precipitation of nickel, cobalt and manganese.

In some embodiments, the pH of the first transition metal solution may be in a range from 3.0 to 4.5. In some embodiments, the pH of the first transition metal solution may be in a range from 3.0 to 4.3, from 3.0 to 4.0, from 3.5 to 4.0, or from 3.8 to 4.0. Within the above range, the first transition metal solution in which iron and aluminum are sufficiently removed while suppressing the loss of nickel, cobalt and manganese may be obtained.

In an embodiment, the basic compound may be added in the form of an aqueous solution. For example, a sodium hydroxide aqueous solution may be added to the leachate.

In some embodiments, the first transition metal solution may include calcium and aluminum. For example, after iron and aluminum are removed from the leachate, the first transition metal solution may include nickel, cobalt, manganese, a residual calcium and a residual aluminum.

In some embodiments, a content of aluminum contained in the first transition metal solution may be in a range from 0.08 wt% to 0.21 wt%, from 0.1 wt% to 0.2 wt%, or from 0.15 wt% to 0.18 wt% based on a total weight of the first transition metal solution.

For example, when aluminum is excessively removed from the leachate, the pH of the first transition metal solution may be increased to 6.0 or more. Accordingly, an excessive amount of a colloidal precipitate ($Al(OH)_3$) may be generated, and the solid-liquid separation may not be easily implemented.

Thus, within the above range, the first transition metal solution from which aluminum is sufficiently removed while suppressing the loss of nickel, cobalt, and manganese may be obtained.

In some embodiments, a temperature for forming the first transition metal solution may be in a range from 50°C to 90°C, from 60°C to 85°C, or from 70°C to 80°C. A rate at which the precipitation reaction of iron and aluminum occurs may be decreased at room temperature (25°C). Thus, an equilibrium state may be rapidly reached within the above temperature range.

In some embodiments, the formation of the first transition metal solution may proceed for 1 hour to 4 hours, for 1.5 hours to 3 hours, or for 2 hours to 3 hours. In the above range, the precipitation reaction for the formation of the iron and aluminum hydroxides ($Fe(OH)_3$ and $Al(OH)_3$) may sufficiently proceed.

For example, in an operation of S30, a fluorine compound may be added to the first transition metal solution to form a second transition metal solution.

In some embodiments, the fluorine compound may include at least one of sodium fluoride, magnesium fluoride and potassium fluoride. In some embodiments, the fluorine compound may include sodium fluoride.

In some embodiments, calcium contained in the first transition metal solution may be precipitated by the fluorine compound.

For example, the above-mentioned type of fluorine compound may at least partially precipitate calcium and the residual aluminum contained in the first transition metal solution in the form of fluorides (e.g., $CaF_2$ and $AlF_x(OH)_{3-x}$). Thereafter, the second transition metal solution in which calcium and the residual aluminum are removed from the first transition metal solution may be obtained through a solid-liquid separation.

In some embodiments, the fluorine compound may be added to satisfy the following Formula 1.

[Formula 1]

$$1 \leq (FL\#) \div [((CA\#) \times 2) + ((AL\#) \times 3)] \leq 2,$$

For example, the fluorine compound may be added to satisfy Equation 2 or Equation 3 below.

[Formula 2]

$$1.2 \leq (FL\#) \div [((CA\#) \times 2) + ((AL\#) \times 3)] \leq 1.8$$

[Formula 3]

$$1.3 \leq (FL\#) \div [((CA\#) \times 2) + ((AL\#) \times 3)] \leq 1.6$$

Wherein in Formula 1 to Formula 3, FL# is the number of moles of fluorine contained in the fluorine compound, CA# is the number of moles of calcium contained in the first transition metal solution, and AL# is the number of moles of aluminum contained in the first transition metal solution.

The fluorine compound may be added to satisfy Formula 1, Formula 2 or Formula 3, and calcium and the residual aluminum may be sufficiently removed while suppressing the loss of nickel, cobalt and manganese. Accordingly, purity of recovered nickel and cobalt may be increased.

In some embodiments, a pH of the second transition metal solution may be greater than 5 and less than or equal to 7. In some embodiments, the pH of the second transition metal solution may be greater than 5 and less than 7, from 5.5 to 7, from 5.5 to 6.5, or from 6.0 to 6.5. In the above range, the second transition metal solution in which calcium and residual aluminum are sufficiently removed while suppressing the loss of nickel, cobalt and manganese may be effectively obtained.

In some embodiments, the second transition metal solution may include nickel, cobalt and manganese. In some embodiments, the second transition metal solution may not include calcium and aluminum, or may include a trace amount of calcium and aluminum.

In some embodiments, a formation temperature of the second transition metal solution may be in a range from 50°C to 90°C, from 60°C to 85°C, or from 70°C to 80°C. A rate of the precipitation reaction of calcium and aluminum which occurs may be reduced. Thus, an equilibrium state may be rapidly reached by increasing the reaction temperature.

In the above temperature range, a rate of the calcium removal may be accelerated while suppressing the loss of nickel, cobalt and manganese. Thus, nickel and cobalt may be efficiently obtained with high purity

In some embodiments, the formation of the second transition metal solution may proceed for 30 minutes to 3 hours, 30 minutes to 2 hours, or 30 minutes to 1 hour. In the above range, a precipitation reaction by which the fluorides of calcium and aluminum ($CaF_2$ and $AlF_x(OH)_{3-x}$) are formed may sufficiently proceed.

In some embodiments, manganese may be extracted from the second transition metal solution.

In some embodiments, the manganese extraction may include removing calcium remaining in the second transition metal solution. For example, the residual calcium remaining in the second transition metal solution obtained through the precipitation reaction and the solid-liquid separation in the S30 operation may be removed.

In some embodiments, when extracting manganese, an extractant may be added to the second transition metal solution.

For example, the extractant may include a phosphoric acid-based extractant. For example, the phosphoric acid-based extractant may include di-2-ethylhexyl phosphoric acid (D2EHPA), 2-ethylhexyl phosphoric acid mono-2-ethylhexyl ester, tributyl phosphate. For example, the extractant may be added together with sodium hydroxide and sulfuric acid.

Accordingly, a trace amount of the residual calcium contained in the second transition metal solution may be removed in the S40 operation, thereby increasing purity of recovered nickel and cobalt.

In some embodiments, cobalt and nickel may be sequentially extracted from the second transition metal solution (e.g., an operation of S50).

For example, the second transition metal solution may be input into a cobalt extraction process (e.g., an operation of S51), and then further subjected to a nickel extraction process (e.g., an operation of S52). The second transition metal solution may be added to the manganese extraction process (e.g., the operation of S40) as described above before being introduced to the cobalt extraction process.

Accordingly, high purity cobalt and nickel may be extracted from the second transition metal solution. For example, the cobalt extraction and nickel extraction described above may be performed sequentially or continuously.

In some embodiments, an extractant used in the cobalt extraction may include a hypophosphorous acid-based extractant, e.g., bis(2,4,4-trimethylpentyl)phosphinic acid.

In some embodiments, an extractant used in the nickel extraction may include a phosphoric acid-based extractant, a phosphorous acid-based extractant and/or a carboxylic acid-based extractant. For example, di-2-ethylhexyl phosphoric acid (D2EHPA), 2-ethylhexyl phosphoric acid mono-2-ethylhexyl ester, tributyl phosphate, trioctyl phosphine oxide, alkyl monocarboxylic acid, etc., may be used.

In some embodiments, the extractant used in the cobalt extraction and the nickel extraction may be added together with sodium hydroxide and sulfuric acid. Accordingly, nickel and cobalt may be extracted in the form of nickel sulfate and cobalt sulfate, respectively.

Hereinafter, embodiments of the present disclosure are described in more detail with reference to experimental examples.

Preparation Example

A Li-Ni-Co-Mn oxide cathode active material as a scrap metal was reduced with a hydrogen gas, washed with water while adding calcium hydroxide, and then solid-liquid separated to obtain a precipitated product (an NCM Paste) containing the reduced transition metal.

A 2M sulfuric acid solution was added to the precipitated product and leached for 6 hours at 80°C and 250 rpm. Thereafter, a leached residue was separated by a centrifugation and two types of leachate (a leachate 1 and a leachate 2) were obtained (the operation of S10).

Sodium hydroxide (50%) aqueous solution was added to the obtained leachates 1 and 2, reacted at 80°C for 2 hours, and then centrifuged to obtain a first transition metal solution from which precipitates were removed (the operation S20 process).

Sodium fluoride was added to each of the first transition metal solutions obtained from the leachates 1 and 2, reacted at 80°C for 30 minutes, and then centrifuged to obtain a second transition metal solution from which precipitates were removed (the operation of S30).

Experiment Example

1. Metal concentration and pH of the leachate before adding the basic compound

Concentrations of metals contained in the leachates 1 and 2 before adding the sodium hydroxide (50%) aqueous solution were measured.

Additionally, pHs of the leachates 1 and 2 were measured using a pH meter.

The measurement results are listed in Table 1 below.

Table 1

| | metal (wt%) | | | | | | pH |
|---|---|---|---|---|---|---|---|
| | Li | Ni | Co | Mn | Ca | Al | |
| leachate 1 | 0.12 | 4.3 | 1.2 | 1.4 | 0.047 | 0.221 | 1.41 |
| leachate 2 | 0.13 | 4.3 | 1.1 | 1.4 | 0.046 | 0.230 | 1.36 |

2. Metal concentration and pH of the first transition metal solution

As shown in Table 2 below, an amount of a sodium hydroxide (50%) aqueous solution was changed based on a total weight (150 g) of the leachate 1 to form first transition metal solutions of Examples and Comparative Examples by the method described in the above Preparation Example.

Concentrations of metals contained in the first transition metal solutions of Examples and Comparative Examples and pHs of the first transition metal solution were measured. The measured results are shown in Table 2 below.

Table 2

| | added amount of sodium hydroxide (50%) aqueous solution based on a total weight of leachate | metal (wt%) | | | | | | pH |
|---|---|---|---|---|---|---|---|---|
| | | Li | Ni | Co | Mn | Ca | Al | |
| Example 1 | 1 wt% | 0.12 | 4.29 | 1.15 | 1.37 | 0.051 | 0.21 | 3.82 |
| Example 2 | 1.5 wt% | 0.12 | 4.28 | 1.14 | 1.35 | 0.048 | 0.17 | 4 |
| Example 3 | 2 wt% | 0.11 | 4.22 | 1.14 | 1.38 | 0.048 | 0.094 | 4.33 |
| Comparative Example 1 | 0.7 wt% | 0.12 | 4.34 | 1.16 | 1.37 | 0.061 | 0.23 | 2.35 |
| Comparative Example 2 | 4 wt% | 0.11 | 3.38 | 1.06 | 1.35 | 0.035 | <0.001 | 5.50 |

Referring to Table 2, the loss of nickel, cobalt and manganese was suppressed without an excessive formation of colloidal precipitates in the first transition metal solutions according to Examples.

However, the first transition metal solution according to Comparative Example 1 had high contents of aluminum and calcium. In the first transition metal solution according to Comparative Example 2, the loss of nickel, cobalt and manganese was increased compared to those in the first transition metal solutions according to Examples.

In the first transition metal solution according to Comparative Example 2, an excessive amount of colloidal precipitates ($Al(OH)_3$) was generated. Accordingly, the solid-liquid separation was not easily implemented.

3. Metal concentration and pH of the second transition metal solution

A first transition metal solution of Reference Example 1 was prepared by adding 1.5 g (1 wt%) of a sodium hydroxide (50%) aqueous solution based on a total weight (150 g) of the leachate 2.

Concentration of metals contained in the first transition metal solution of Reference Example 1 and a pH of the first transition metal solution were measured. The measured results are shown in Table 3 below.

Table 3

| | metal (wt%) | | | | | | pH |
|---|---|---|---|---|---|---|---|
| | Li | Ni | Co | Mn | Ca | Al | |
| Reference Example 1 | 0.12 | 4.37 | 1.15 | 1.38 | 0.045 | 0.22 | 3.9 |

Thereafter, as shown in Table 4 below, an added amount of sodium fluoride to the first transition metal solution of Reference Example 1 obtained from the leachate 2 was changed to form second transition metal solutions of Examples 4 and 5, and Comparative Example 3 by the method described in the above Preparation Example.

Concentration of metals contained in the second transition metal solutions of Examples 4 and 5, and Comparative Example 3 and pHs of the second transition metal solution were measured. The measured results are shown in Table 4 below.

Table 4

| | added amount of sodium fluoride [1] | metal (wt%) | | | | | | pH |
|---|---|---|---|---|---|---|---|---|
| | | Li | Ni | Co | Mn | Ca | Al | |
| Example 4 | 1.3eq | 0.066 | 4.27 | 1.12 | 1.37 | 0.02 | <0.001 | 5.89 |
| Example 5 | 1.5eq | 0.061 | 4.26 | 1.12 | 1.37 | 0.009 | <0.001 | 6.19 |
| Comparative Example 3 | 0.5eq | 0.12 | 4.28 | 1.13 | 1.37 | 0.04 | 0.19 | 4.93 |
| [1] (FL#)÷[((CA#)×2)+((AL#)×3)] | | | | | | | | |

Wherein FL# is the number of moles of fluorine contained in the fluorine compound, CA# is the number of moles of calcium contained in the first transition metal solution, and AL# is the number of moles of aluminum contained in the first transition metal solution.

Referring to Table 4, the pHs in the second transition metal solutions according to Examples 4 and 5 were greater than 5, and the loss of nickel, cobalt and manganese was suppressed while lowering the concentrations of calcium and aluminum.

However, the second transition metal solution according to Comparative Example 3 had a higher concentration of calcium and aluminum than those in the second transition metal solution according to Examples 4 and 5.

4. Metal concentration of the second transition metal solution formed at room temperature

A second transition metal solution was formed by the same method as that in Preparation Example, except that the S20 process was performed at room temperature (25°C) for 2 hours and the S30 process was performed at room temperature (25°C) for 22 hours.

1.5 g (1 wt%) of the sodium hydroxide (50%) aqueous solution was added based on the total weight (150 g) of the leachate 1 in the S20 process, and 1.5 eq (calculated by the same formula as indicated 1) in Table 4 above) of sodium fluoride was added to the first transition metal solution obtained from the leachate 1 in the S30 process.

Concentrations of metals contained in the formed second transition metal solution were measured based on a formation hour, and the measured results are shown in Table 5 below.

Table 5

|  | metal (wt%) | | | | | |
|---|---|---|---|---|---|---|
|  | Li | Ni | Co | Mn | Ca | Al |
| 0 hour | 0.12 | 4.42 | 1.15 | 1.39 | 0.042 | 0.22 |
| 4 hours | 0.049 | 4.26 | 1.12 | 1.37 | 0.01 | <0.001 |
| 6 hours | 0.048 | 4.24 | 1.12 | 1.37 | 0.009 | <0.001 |
| 8 hours | 0.052 | 4.23 | 1.12 | 1.37 | 0.005 | <0.001 |
| 12 hours | 0.055 | 4.23 | 1.12 | 1.36 | 0.0022 | <0.001 |
| 24 hours | 0.058 | 4.23 | 1.12 | 1.36 | 0.0014 | <0.001 |

Referring to Table 5, when compared to the second transition metal solution of Example 5 of Table 4 in which added amounts of the basic compound and the fluorine compound were the same, a rate at which the precipitation reaction of calcium and aluminum occurred was slow in the second transition metal solution formed by performing the S20 process and the S30 process at room temperature. Accordingly, it may be predicted that high purity nickel and cobalt may be efficiently obtained when the reaction temperature is high.

**Claims**

1. A method of recovering a transition metal from a lithium secondary battery, the method comprising:

    adding an acidic solution to a recovery target material containing a transition metal to form a leachate;
    adding a basic compound to the leachate in an amount of 0.5 wt% to 1.9 wt% based on a total weight of the leachate to form a first transition metal solution; and
    adding a fluorine compound to the first transition metal solution to form a second transition metal solution.

2. The method of claim 1, wherein the formation of the second transition metal solution includes precipitating calcium contained in the first transition metal solution by the fluorine compound.

3. The method of claim 1 or claim 2, wherein the transition metal includes at least one of nickel, cobalt and manganese.

4. The method of claim 3, (a) further comprising sequentially extracting cobalt and nickel from the second transition metal solution and/or (b) further comprising extracting manganese from the second transition metal solution.

5. The method of claim 4, wherein the extracting manganese includes removing calcium remaining in the second transition metal solution.

6. The method of any one of claims 1 to 5, wherein the recovery target material includes a precipitated product containing the reduced transition metal.

7. The method of any one of claims 1 to 6, wherein the acidic solution includes sulfuric acid.

8. The method of any one of claims 1 to 7, wherein (a) a pH of the leachate is in a range from 1 to 2 and/or (b) a pH of the second transition metal solution is greater than 5, and less than or equal to 7.

9. The method of any one of claims 1 to 8, wherein the basic compound includes at least one of sodium hydroxide, lithium hydroxide and potassium hydroxide.

10. The method of any one of claims 1 to 9, wherein a pH of the first transition metal solution is in a range from 3 to 4.5.

11. The method of any one of claims 1 to 10, wherein the fluorine compound includes at least one of sodium fluoride, magnesium fluoride and potassium fluoride.

12. The method of any one of claims 1 to 11, wherein the first transition metal solution contains calcium and aluminum.

13. The method of claim 12, wherein the fluorine compound is added to satisfy Formula 1:

$$\text{Formula 1}$$

$$1 \leq (FL\#) \div [((CA\#) \times 2) + ((AL\#) \times 3)] \leq 2.$$

Wherein in Formula 1, FL# is the number of moles of fluorine contained in the fluorine compound, CA# is the number of moles of calcium contained in the first transition metal solution, and AL# is the number of moles of aluminum contained in the first transition metal solution.

14. The method of any one of claims 1 to 13, wherein the formation of the first transition metal solution and the formation of the second transition metal solution are performed at a temperature ranging from 50°C to 90°C.

15. A method of recovering a transition metal from a lithium secondary battery, the method comprising:

forming a leachate by adding sulfuric acid to a precipitated target material containing the transition metal;
adding a basic compound to the leachate to form a first transition metal solution; and
adding a fluorine compound to the first transition metal solution to form a second transition metal solution,
wherein the formation of the second transition metal solution includes precipitating calcium contained in the first transition metal solution by the fluorine compound.

# FIG. 1

```
┌─────────────────────────────────┐
│  Recovery target material including │
│        a transition metal          │
└─────────────────────────────────┘
              │
              │◄──────────── acidic solution
              ▼
┌─────────────────────────────────┐
│        Forming a leachate         │  ～S10
└─────────────────────────────────┘
              │
              │◄──────────── basic compound
              ▼
┌─────────────────────────────────┐
│            Forming                │  ～S20
│   a first transition metal solution │
└─────────────────────────────────┘
              │
              │◄──────────── fluorine compound
              ▼
┌─────────────────────────────────┐
│            Forming                │  ～S30
│  a second transition metal solution │
└─────────────────────────────────┘
              │
              ▼
┌─────────────────────────────────┐
│       Extracting manganese        │  ～S40
└─────────────────────────────────┘
              │
              │        S51(S50)              S52(S50)
              ▼
┌───────────────────┐      ┌───────────────────┐
│  Extracting cobalt │─────►│  Extracting nickel │
└───────────────────┘      └───────────────────┘
```

# FIG. 2

Europäisches
Patentamt

European
Patent Office

Office européen
des brevets

## EUROPEAN SEARCH REPORT

**Application Number**

EP 24 18 0291

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2019 0044792 A (TOWN MINING RESOURCE CO LTD [KR]) 2 May 2019 (2019-05-02) * paragraph [0050] - paragraph [0068] * | 1-15 | INV. C22B3/00 C22B47/00 C22B3/06 |
| X | KR 2019 0079988 A (TOWN MINING RESOURCE CO LTD [KR]) 8 July 2019 (2019-07-08) * paragraph [0053] - paragraph [0076] * | 1-15 | C22B3/44 C22B7/00 C22B26/12 H01M10/54 |
| X | KR 102 206 952 B1 (COSMO ECOCHEM CO LTD [KR]) 25 January 2021 (2021-01-25) * paragraph [[0008]] - paragraph [[0010]] * * paragraph [[0015]] - paragraph [[0016]] * * claim 1 and 2 * | 1-15 | |
| X | CN 111 994 925 A (GUIZHOU DALONG HUICHENG NEW MAT CO LTD; HUNANXINDA NEW MAT CO LTD) 27 November 2020 (2020-11-27) * claim 1 to 7 * * example 1 and 2 * | 1-15 | |
| A | WO 2023/282564 A1 (KOREA INST GEOSCIENCE & MINERAL RESOURCES [KR]) 12 January 2023 (2023-01-12) * the whole document * | 1-15 | TECHNICAL FIELDS SEARCHED (IPC) C22B H01M |
| A | CN 112 374 511 A (UNIV BEIJING SCIENCE & TECH) 19 February 2021 (2021-02-19) * the whole document * | 1-15 | |
| A | WO 2022/154316 A1 (SK INNOVATION CO LTD [KR]) 21 July 2022 (2022-07-21) * the whole document * | 1-15 | |

-/--

The present search report has been drawn up for all claims

| Place of search | Date of completion of the search | Examiner |
|---|---|---|
| The Hague | 7 November 2024 | Martinez Miró, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 24 18 0291

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 113 957 252 A (HUNAN BRUNP RECYCLING TECH CO LTD ET AL.) 21 January 2022 (2022-01-21) * the whole document * | 1-15 | |
| A | CN 115 867 681 A (SK ENERGY CO LTD) 28 March 2023 (2023-03-28) * the whole document * | 1-15 | |

TECHNICAL FIELDS
SEARCHED      (IPC)

The present search report has been drawn up for all claims

| Place of search | Date of completion of the search | Examiner |
|---|---|---|
| The Hague | 7 November 2024 | Martinez Miró, M |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.............................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 18 0291

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2024

| Patent document cited in search report | Publication date | Patent family member(s) | | Publication date |
|---|---|---|---|---|
| KR 20190044792 A | 02-05-2019 | NONE | | |
| KR 20190079988 A | 08-07-2019 | NONE | | |
| KR 102206952 B1 | 25-01-2021 | NONE | | |
| CN 111994925 A | 27-11-2020 | NONE | | |
| WO 2023282564 A1 | 12-01-2023 | CA | 3220297 A1 | 12-01-2023 |
| | | EP | 4368574 A1 | 15-05-2024 |
| | | KR | 102378751 B1 | 25-03-2022 |
| | | US | 2024247334 A1 | 25-07-2024 |
| | | WO | 2023282564 A1 | 12-01-2023 |
| CN 112374511 A | 19-02-2021 | NONE | | |
| WO 2022154316 A1 | 21-07-2022 | CN | 116670310 A | 29-08-2023 |
| | | EP | 4273988 A1 | 08-11-2023 |
| | | JP | 2024503403 A | 25-01-2024 |
| | | KR | 20220103499 A | 22-07-2022 |
| | | US | 2024030510 A1 | 25-01-2024 |
| | | WO | 2022154316 A1 | 21-07-2022 |
| CN 113957252 A | 21-01-2022 | CN | 113957252 A | 21-01-2022 |
| | | DE | 112022002565 T5 | 07-03-2024 |
| | | ES | 2976316 A2 | 29-07-2024 |
| | | GB | 2622169 A | 06-03-2024 |
| | | US | 2024347803 A1 | 17-10-2024 |
| | | WO | 2023045331 A1 | 30-03-2023 |
| CN 115867681 A | 28-03-2023 | CN | 115867681 A | 28-03-2023 |
| | | EP | 4155425 A1 | 29-03-2023 |
| | | JP | 2023532633 A | 31-07-2023 |
| | | KR | 20210156539 A | 27-12-2021 |
| | | US | 2023250507 A1 | 10-08-2023 |
| | | WO | 2021256732 A1 | 23-12-2021 |

EPO FORM P0459

For more details about this annex : see Official Journal of the European Patent Office, No. 12/82